# EUROPÄISCHE PATENTSCHRIFT

(11) **EP 1 106 853 B1**
(45) Veröffentlichungstag und Bekanntmachung des Hinweises auf die Patenterteilung: **22.12.2004**
(21) Anmeldenummer: 01105077.0
(22) Anmeldetag: 20.11.1996
(51) Int. Cl.: F16D 3/68, F16F 15/123

(54) **Kupplung mit Torsionsschwingungsdämpfer**
Clutch with torsional vibration damper
Embrayage avec amortisseur de torsion

(30) Priorität: 01.12.1995 DE 19544832
(43) Veröffentlichungstag der Anmeldung: 13.06.2001
(62) Teilanmeldung aus: 96118572.5
(73) Patentinhaber: Rohs-Voigt Patentverwertungsgesellschaft mbH, 52351 Düren (DE)
(72) Erfinder: Rohs, Ulrich, Dr.-Ing., 52351 Düren (DE); Heidingsfeld, Dietmar, Dipl.-Ing., 52078 Aachen (DE)
(74) Vertreter: Castell, Klaus, Dr.-Ing.

(56) Entgegenhaltungen:
- WO-A-95/14180
- US-A- 4 274 524

## Beschreibung

Die Erfindung betrifft eine Kupplung nach dem Oberbegriff des Patentanspruches 1.

Bei Kupplungen ist es nachteilig, wenn die Drehschwingungen des Motors in den Abtriebsstrang übertragen werden, insbesondere dann, wenn die Frequenzen den Eigenfrequenzen des Systems nahe kommen. Dies ist besonders im Leerlauf unangenehm.

Um dies zu vermeiden, sind verschiedene Konstruktionen bekannt, bei denen elastische Dämpfungsmittel in Form von Federn oder hydraulischen Bauteilen zwischen den Kupplungsteilen angeordnet sind. Diese Konstruktionen haben den Nachteil, daß sie stets nur einen Teil des Arbeitsspektrums des Antriebes umfassen, aber im übrigen Lastbereich wirkungslos sind. Letzteres gilt insbesondere für den Leerlaufbereich. Das Problem liegt darin, daß für den Lastbereich eine dem übertragenen Drehmoment und der Drehzahl entsprechende hohe Federkraft und Dämpfung erforderlich sind, während beim Leerlauf bereits geringe Federkräfte und so gut wie keine Dämpfung genügen, um eine Leerlaufentkopplung ("idle-Entkopplung") zu erreichen. Hinzu kommt, daß die bekannten Ausführungen sehr aufwendig und daher teuer gebaut sind.

So offenbart die WO 95/14180 Al neine Kupplung bestehend aus einer umlaufenden Antriebsscheibe und einer hierzu koaxialen, gleichsinnig umlaufenden Abtriebsscheibe mit Mitteln zur elastischen Kraftübertragung und mit Mitteln zur Dämpfung von Drehschwingungen, wobei eine aus Grauguss gebildete Abtriebsscheibe und ein Blechteller gemeinsam über ein Gleitlager an der Antriebsscheibe gelagert sind und im Bereich dieses Lagers eine Reibungseinrichtung zur Drehschwingungsdämpfung vorgesehen ist.

Aufgabe der Erfindung ist es, eine Kupplung zu schaffen, bei welcher die Lebensdauer des Gleitlagers erheblich erhöht ist.

Die gestellte Aufgabe wird erfindungsgemäß durch die kennzeichnenden Merkmale des Patentanspruchs 1 gelöst.

So können durch die erfindungsgemäße Kupplung Einflüsse der Dämpfungseinrichtung auf das Gleitlager vermieden werden.

Dieses gilt erstens insbesondere hinsichtlich einer Wärmeentwicklung, die in zweierlei Hinsicht nachteilig auf das Gleitlager wirken kann. So führt einerseits die Wärme unmittelbar zu einer höheren Belastung der Gleitlagermaterialien, dem diese Materialen, insbesondere wenn es sich um Kunststoffe handelt, nur schwer widerstehen können. Zum zweiten führt diese Wärmebelastung auch zu unterschiedlichen thermischen Expansionen der am Gleitlager beteiligten Materialien, die lediglich durch ein erhöhtes Spiel in dem Gleitlager kompensiert werden können, weil ein derartiges, erhöhtes Spiel wiederum zu einem verstärkten Verschleiß führt, insbesondere, wenn die Kupplung bzw. der entsprechende Antriebsstrang unbelastet bzw. wenig belastet ist und die Dämpfung nur wenig genutzt und somit erwärmt wird.

Zweitens bringt eine im Gleitlagerbereich angeordnete Verspannung der Mittel zur Dämpfung von Drehschwingungen auch Spannungen in den Bereich des Gleitlagers, die von diesem abgefangen werden müssen und somit das Gleitlager darüber hinaus belasten.

Dabei dienen die Schubkolben als elastische Kraftübertragungsmittel und als Mittel zur Dämpfung der Drehschwingungen. Je nach der Drehrichtung der Antriebsscheibe wird der eine oder andere Schubkolben gegen die Wirkung der sie verbindenden Druckfedern gegen die Mitte der Taschen verschoben und nimmt dabei einerseits die Abtriebsscheibe mit und übt andererseits eine Reibungskraft auf die Mantelfläche der Tasche aus. die zu einer Dämpfung der Drehschwingungen der Antriebsscheibe auf den Abtriebsstrang führt. Diese Dämpfung ist last- und drehzahlabhängig.

Beim Leerlauf ist keine Reibungskraft zur Dämpfung der Drehschwingungen erforderlich. Es genügen geringe Federkräfte, um ein Rückstellmoment von der Antriebs- auf die Abtriebsscheibe aufzubauen und die Drehschwingungen zu entkoppeln. Zu diesem Zweck sind an der Antriebsscheibe oder an den Schubkolben geeignete Mittel, z.B. in der Form von tangentialen oder radialen Federn vorgesehen, die auf zugeordnete Flächen der Antriebsscheibe einwirken.

In den Unteransprüchen sind weitere vorteilhafte Ausgestaltungen der Erfindung angegeben.

Mit der erfindungsgemäßen schwingungsdämpfenden mechanischen Kupplung ist es möglich, einen großen Teil des Einsatzbereiches der derzeit üblichen elastischen Kupplungreibscheiben bei Kraftfahrzeugen abzudecken.

Nachstehend ist die Erfindung anhand der Zeichnung näher erläutert. Es zeigen:
- Fig.1: einen Querschnitt durch eine Kupplung nach der Erfindung,
- Fig.2: einen axialen Querschnitt durch die Kupplung,
- Fig.3: eine vergrößerte Einzelheit der Fig.1 bei Belastung,
- Fig.4: eine Ausführungsform einer Tasche in der Antriebsscheibe
- Fig.5: eine andere Ausführungsform ei ner Tasche in der Antriebsscheibe,
- Fig.6: eine Ausführungsform mit tangentialer Leerlaufabstützung in Querschnitten nach den Linien VIa-VIa und VIb-VIb in Fig.7 und
- Fig.7: einen axialen Längsschnitt nach der Linie VII-VII in Fig.6

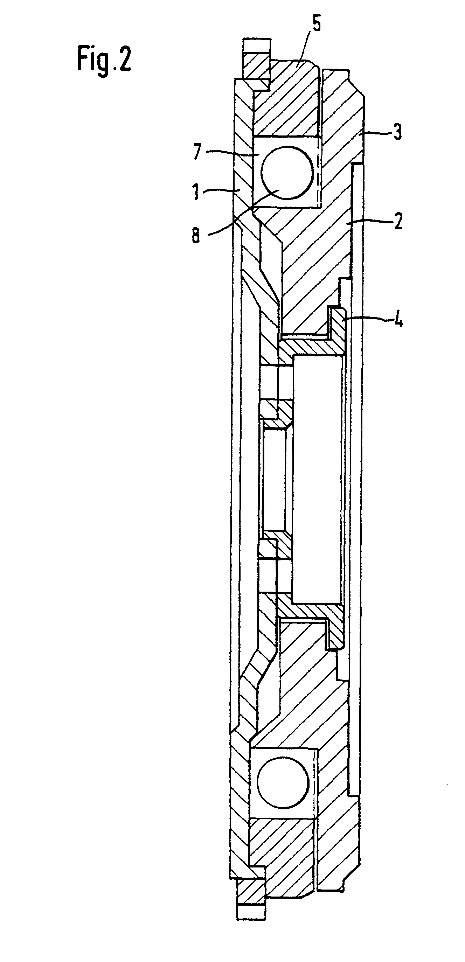

Die Zeichnung zeigt eine mechanische Kupplung mit torsionsschwingungsdämpfenden Eigenschaften in der Leerlaufstellung. Die Kupplung besteht aus einer Antriebsscheibe 1 und einer hierzu koaxialen Abtriebsscheibe 2. Am rückwärtigen Teil 3 der Abtriebsscheibe 2 (Fig.2) greift ein nicht dargestellter Abtriebsstrang mit weiteren Kupplungselementen einer Schaltkupplung oder dgl. an.

Wie Fig.2 zeigt, sitzt die Abtriebsscheibe 2 auf einer Zentriernabe 4, die ein axiales Z-förmiges Profil hat und mit der Antriebsscheibe 1 verbunden ist.

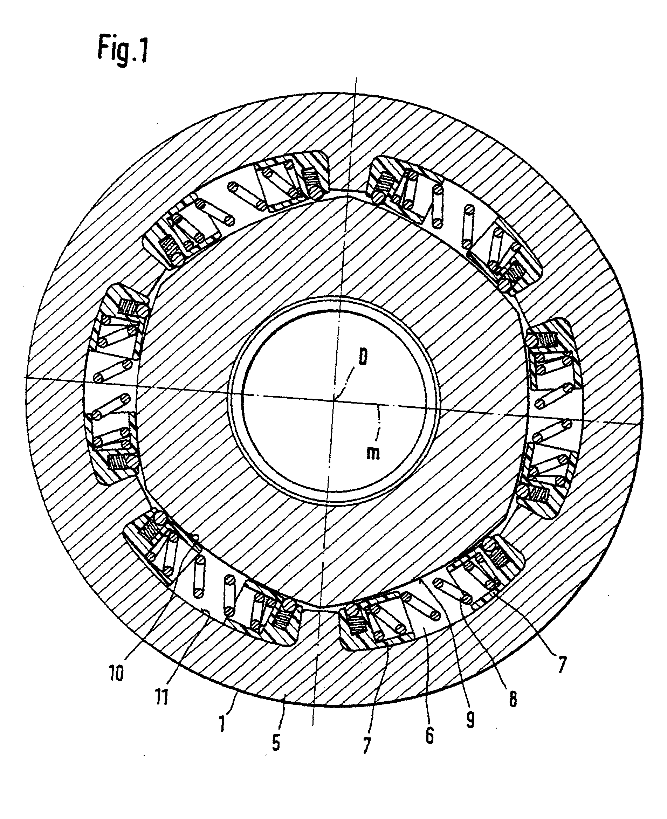

Wie Fig.1 zeigt, weist die Antriebsscheibe 1 einen ringförmigen Teil 5 auf, der einen vorderen Teil der Abtriebsscheibe 2 übergreift und an seiner Innenseite über den Umfang verteilte radiale Taschen 6 aufweist, die zu beiden Enden hin keilförmig verjüngt sind.

In jeder Tasche ist ein Paar Schubkolben 7 angeordnet, die durch mindestens eine Druckfeder 8 auseinandergedrückt werden. Im Leerlauf liegen die Schubkolben 7 gegen die Enden der Taschen 6 an.

Die Mantelfläche 9 der Abtriebsscheibe 2 ist im Querschnitt polygonal ausgebildet und hat einen mittleren Krümmungsradius R. Dementsprechend ist die der Abtriebsscheibe 2 zugewandte Seite 10 der Schubkolben 7 eben oder leicht gewölbt ausgebildet.

Die Mantelfläche 11 jeder Tasche bildet einen Teilzylinder, dessen Krümmungsachse mit der Drehachse D der Kupplung übereinstimmt oder auf der radialen Mittelebene m durch die Tasche zwischen dieser und der Drehachse D der Kupplung liegt.

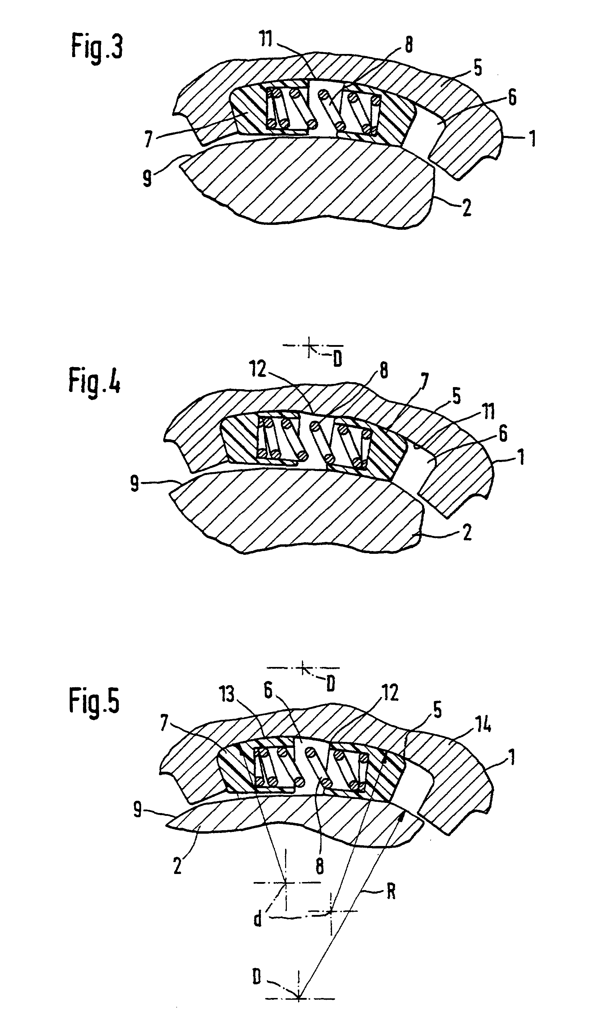

Um einerseits ein Anstoßen der Schubkolben 7 gegeneinander zu vermeiden und andererseits bei sehr hoher Last eine besonders hohe Reibungskraft und damit eine hohe Dämpfung zu erzeugen, ist, wie Fig.4 zeigt, zweckmäßig in mindestens einigen der Taschen 6 im Bereich deren radialer Mittelebene m eine wulstartige Erhebung 12 in der Mantelfläche 11 vorgesehen, die eine Auflaufschwelle für die Schubkolben 7 bildet.

Eine solche Erhebung kann auch dadurch gebildet werden (Fig.5), daß die Mantelfläche 11 der Tasche 6 aus zwei sich schneidenden Teilzylindern 13,14 besteht, deren Achsen d beiderseits der radialen Mittelebene m durch die Tasche 6 und im Bereich zwischen der Drehachse D der Kupplung und der Tasche 6 liegen. Die Erhebung 12 braucht nur wenige Zehntel Millimeter zu betragen. Die Krümmungsradien der Teilzylinder 13,14 können, müssen aber nicht verschieden sein. Fig.5 ist nicht maßstäblich.

Wie Fig.1 ferner zeigt, sind in den Schubkolben 7 radiale Bohrungen vorgesehen, in denen kleine Druckfedern angeordnet sind, die mittels Übertragungskugeln auf die Mantelfläche 9 der Abtriebsscheibe 2 drücken. Damit wird während des Leerlaufes ein Rückstellmoment von der Antriebs- auf die Abtriebsscheibe , aber so gut wie keine Reibungskraft ausgeübt.

Die Druckfedern 16 könnten ebensogut auch in den Stegen 18 der Abtriebsscheibe 1 zwischen den Taschen 6 angeordnet sein.

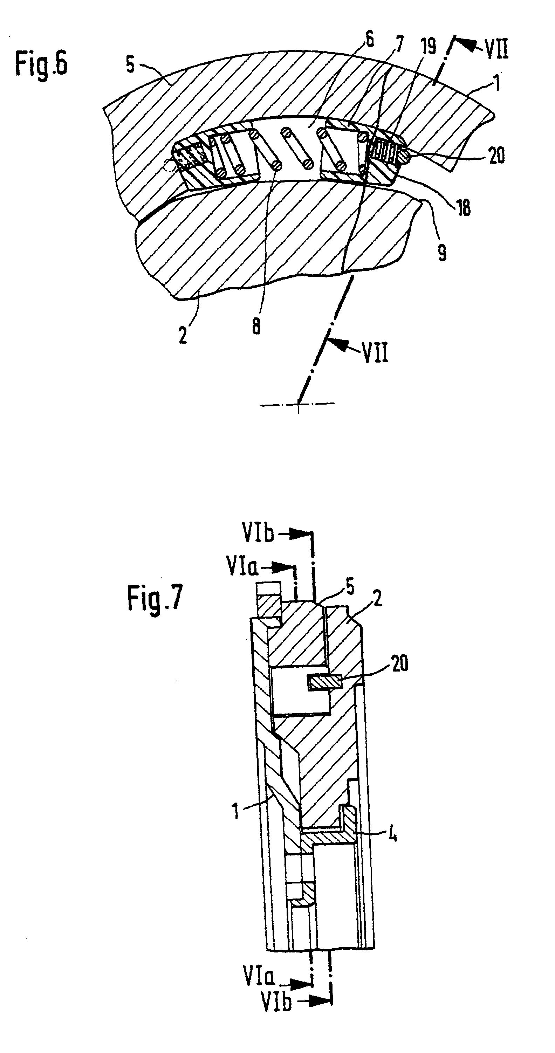

Es ist auch möglich, die Druckfedern in tangentialer Richtung (Fig.6,7) in den Schubkolben 7 oder in der Antriebsscheibe 1 anzuordnen, und sie auf radiale Flächen der Abtriebsscheibe 2 wirken zu lassen, z.B. axial versetzt zu den Taschen 6.

Die Fig.6 und 7 zeigen eine solche Ausführungsform. Hier sind in den Enden der Schubkolben 7 tangentiale Öffnungen 18 vorgesehen, in denen leichte Druckfedern 19 angeordnet sind. Diese wirken im Leerlauf, d.h. wenn die Schubkolben 7 ihre Endstellungen in den Taschen 6 eingenommen haben, gegen axiale Stifte 20, die im rückwärtigen Teil 3 der Abtriebsscheibe 2 befestigt sind und eine radiale Anschlagfläche bilden. Bei geringen Relativbewegungen der Antriebsscheibe 1 gegenüber der Abtriebsscheibe 2 infolge von Leerlauf-Drehschwingungen wirken lediglich die Druckfedern 19, ohne daß die Schubkolben 7 bewegt werden.

Wenn die Antriebsscheibe 1 gedreht wird und ein Drehmoment auf den Abtriebsstrang überträgt, bewegt sie sich relativ zur Abtriebsscheibe 2 und bewegt dann jeweils einen der beiden in einer Tasche 6 befindlichen Schubkolben 7 gegen den anderen Schubkolben 7 (Fig.3). Dabei wird auf die Antriebsscheibe 1 eine Reibungskraft ausgeübt, die zu einer Dämpfung der Drehschwingungen führt.

Im Leerlauf, wenn kein Drehmoment auf die Abtriebsscheibe 2 ausgeübt wird, genügt das von der Feder 16 bzw. 19 ausgeübte Rückstellmoment, um eine Entkopplung der Drehschwingungen zu erreichen. Eine Reibungskraft ist hierbei nicht erforderlich.

Vorteilhaft bestehen aus Kostengründen die Antriebsscheibe 1 aus einem Stahlblechteil und die Abtriebscheibe 2 aus Grauguß. Die Schubkolben bestehen zweckmäßig aus einem warmfesten Kunststoff.

Mit der erfindungsgemäßen Kupplung können teure mechanische oder hydraulische Torsionsschwingungsdämpfer eingespart werden.

## Patentansprüche

1. Kupplung bestehend aus einer umlaufenden Antriebsscheibe (1) und einer hierzu koaxialen, gleichsinnig umlaufenden Abtriebsscheibe (2) mit Mitteln zur elastischen Kraftübertragung und mit Mitteln zur Dämpfung von Drehschwingungen, ***dadurch gekennzeichnet, dass*** die Abtriebsscheibe (2) aus Grauguss gebildet ist und über ein Gleitlager mit einer einstückigen Gleitfläche an der Antriebsscheibe (1) gelagert ist, wobei sämtliche Mittel zur elastischen Kraftübertragung und die Dämpfungsmittel radial außerhalb des Gleitlagers angeordnet sind.

2. Kupplung nach Anspruch 1, ***dadurch gekennzeichnet, dass*** die Abtriebsscheibe (2) auf einer Zentriernabe (4) sitzt.

3. Kupplung nach Anspruch 2, ***dadurch gekennzeichnet, dass*** die Zentriernabe (4) mit der Antriebsscheibe (1) verbunden ist.

4. Kupplung nach Anspruch 2 oder 3, ***dadurch gekennzeichnet, dass*** die Zentriernabe (4) eine axiales Z-förmiges Profil hat.

5. Kupplung nach einem der Ansprüche 1 bis 4, ***dadurch gekennzeichnet, dass*** das Gleitlager eine U-profilförmige Lagerschale umfasst.

## Claims

1. A clutch consisting of a rotating driving pulley (1) and of a coaxial driven pulley (2) which rotates in the same direction having means for elastic force transmission and having means for damping torsional vibrations, ***characterized in that*** the driven pulley (2) is made of grey cast iron and is carried on the driving pulley (1) by a sliding bearing having an integral sliding surface, all the means for elastic force transmission and the damping means being disposed radially outside of the sliding bearing.

2. The clutch according to claim 1, ***characterized in that*** the driven pulley (2) is seated on a centering hub (4).

3. The clutch according to claim 2, ***characterized in that*** the centering hub (4) is connected to the driving pulley (1).

4. The clutch according to claim 2 or 3, ***characterized in that*** the centering hub (4) has an axial Z-shaped profile.

5. The clutch according to one of the claims 1 to 4, ***characterized in that*** the sliding bearing includes a U-form profiled bearing shell.

## Revendications

1. Embrayage constitué par une poulie menante (1) mobile en rotation et par une poulie menée (2), coaxiale par rapport à celle-ci et mobile en rotation dans le même sens, avec des moyens de transmission élastique des efforts et avec des moyens amortisseurs des vibrations de torsion, ***caractérisé en ce que*** la poulie menée (2) est réalisée en fonte grise et est supportée par un palier lisse ayant une surface lisse d'un seul tenant sur la poulie menante (1), tous les moyens de transmission élastique d'efforts et tous les moyens amortisseurs étant disposés radialement à l'extérieur du palier lisse.

2. Embrayage selon la revendication 1, ***caractérisé en ce que*** la poulie menée (2) repose sur un moyeu de centrage (4).

3. Embrayage selon la revendication 2, ***caractérisé en ce que*** le moyeu de centrage (4) est relié à la poulie menante (1).

4. Embrayage selon la revendication 2 ou 3, ***caractérisé en ce que*** le moyeu de centrage (4) a une forme de profil axial en Z.

5. Embrayage selon l'une quelconque des revendications 1 à 4, ***caractérisé en ce que*** le palier lisse comprend un coussinet en forme de profil U.
